# EUROPEAN PATENT SPECIFICATION

(11) **EP 2 150 099 B1**
(45) Date of publication and mention of the grant of the patent: **27.11.2013**
(21) Application number: 08761707.2
(22) Date of filing: 28.05.2008
(51) Int. Cl.: A01G 23/083

(54) **ARRANGEMENT AND METHOD FOR ENABLING MASS LOGGING**
ANORDNUNG UND VERFAHREN FÜR MASSENPROTOKOLLIERUNG
AGENCEMENT ET PROCÉDÉ POUR PERMETTRE L'EXPLOITATION FORESTIÈRE EN MASSE

(30) Priority: 30.05.2007 FI 20075390
(43) Date of publication of application: 10.02.2010
(73) Proprietor: Ponsse OYJ, 74200 Vieremä (FI)
(72) Inventor: TROTTIER, Jean, Dolbeau-Mistassini, Québec, G8L 2T3 (CA); KAURALA, Arto, FI-74120 Iisalmi (FI)
(74) Representative: Kolster Oy Ab
(86) International application number: PCT/FI2008/050311
(87) International publication number: WO 2008/145822

(56) References cited:
- WO-A1-01/10190
- CA-A1- 2 561 209
- US-A- 4 194 542
- US-A- 5 129 438
- US-A1- 2002 079 020
- US-A1- 2004 238 068

## Description

### BACKGROUND OF THE INVENTION

The invention relates to an arrangement according to claim 1 for enabling efficient mass logging of tree trunks by means of a conventional harvester end of a forestry machine.

This arrangement is intended to replace one or more conventional delimbing knives on the harvester end of a forestry machine.

The invention further relates to a method according to the preamble of claim 12 to be used for controlling the present arrangement when the harvester end of the forestry machine is used for collecting a plural number of tree trunks at the same time or in succession, without releasing the already collected tree trunks from the harvester end.

One of the biggest challenges facing contemporary silviculture is mechanical logging of small-stem harvesting and/or thinning areas in an economically profitable manner. Recent developments have led to a situation where it is now considered efficient, in terms of overall economics, to use small-stem forest stand not only for timber and paper industry products as earlier but also for producing e.g. thermal and electric energy. It has also been noticed that in order for the logging of such small-stem trees to be sufficiently efficient, a principle of what is known as mass logging should be applicable, i.e. a harvester end used for logging small-stem trees should be applicable for collecting a plural number of separate entire trunks one after the other without having to release trunks already collected from the harvester end.

The solution of the invention enables efficient use of a forestry machine for harvesting not only what is known as merchantable wood, i.e. trunks to be delimbed, but also small-stem trees. Typically merchantable wood may be thought of as raw material for timber or paper, for example, and to therefore have such dimensions that collecting the trunks individually is sufficiently efficient, or that delimbing, for example, may be considered necessary. On the other hand, small-stem trees may not require delimbing at all, or a very limited delimbing may be enough. In order to ensure the highest possible energy yield, wood to be used for energy production is in fact typically preferably harvested without cutting the branches and the tops, whereas in paper industry, for example, the raw material has to be delimbed at least to some extent.

In mechanical harvesting, prior art knows various wood-processing machines, such as feller-bunchers, double-grip harvesters and single-grip harvesters. Normally a conventional single-grip harvester is capable of efficiently handling only one tree trunk at a time. An example of this kind of harvester end movable by a boom of a wood-handling machine is disclosed in WO 97/17834. However, if the diameter of the tree is small and the wood is mainly used as raw material for energy production or paper manufacturing, the method known as mass logging is better suited to the harvesting. Known harvester ends are, however, of a relatively heavy structure, complex and expensive, which is another reason why they are not suitable for harvesting less valuable energy wood. It has therefore become increasingly common to use also in energy wood harvesting devices known as energy wood grapples, which are to be mounted to a forestry machine and implemented without feeder or delimbing means, for collecting a quantity of trees at a time. A suitable carrier for an energy wood grapple is a single-grip harvester commonly used in harvesting merchantable wood or a load-bearing tractor, provided that the loader of the tractor is powerful and strong enough for the work.

As regards the profitability of small-stem wood harvesting, it is essential to be able to handle the trees by mass logging, because it enables to avoid repeating all work phases for each tree. This may be assumed to enhance loading in particular.

In fact prior art knows different working devices used in forestry machines and designed particularly for collecting small-stem trees with a view to enable mechanical and efficient harvesting of energy wood. Examples of different energy wood grapples are presented in the solutions disclosed in utility model publication U20040172 and patent publication FI20040547.

However, the use of such energy wood grapples particularly designed for mass logging is fairly limited, because they are mainly suitable for cutting and collecting only trees of a small diameter and not exactly for delimbing, for example. The main reason for this is that the harvester ends are not provided with feeder and delimbing means.

On the other hand, there are also some solutions for equipping a conventional harvester end of a forestry machine with a tool suitable for mass logging. This prior art technology is presented in patent publication FI 105883, for example.

Nevertheless, there are some drawbacks in this prior art. For example, the solution to be mounted to the harvester end, for example, most often increases the weight of the harvester end significantly, by tens of kilograms even. It is also typical that the height of the entity formed by the harvester end, its pivot frame and the rotator increases, which may cause problems or impaired operational characteristics, particularly in view of loading. Auxiliary devices needed in addition to the usual harvester end structures are also liable to add to the costs of this type of solution, and to lead to a more complex structure.

Moreover, the characteristics of a device such as the one in patent publication FI 105883, for example, are only available for use when the harvester end is erect, i.e. in a position for typically grabbing a vertical, growing tree. This is due to a special feature according to which in the solution of the publication the device is mounted in connection with a pivot frame supporting the harvester end, the pivot frame being arranged in a manner known per se to pivot in relation to the body of the harvester end. It has also been noticed, however, that the device of FI 105883 may cause the butt ends of the trees to project at the cutting saw or some other cutting device, because the support reaction subjected to the tree trunks to enable mass logging has an impact over a relatively long distance from the butt ends and thereby from the cutting saw. This, in turn, has been observed liable to cause operational disturbance particularly in chain saws, which are commonly used on harvester ends, and to cause the chains to come off from the chain plate. This kind of disturbance, although extremely simple as such, always interrupts the work of the forestry machine and impairs productivity.

Often the collection areas also contain trees that are, nevertheless, suitable as timber and therefore, unlike most of the tree stock, they are preferably felled and delimbed, and also otherwise handled, individually. Thus there is a need to provide a harvester end capable of both handling one or more tree trunks at the same time and, when desired, one tree trunk at a time. This calls for functionalities of a harvester end known per se, such as measuring of trunk diameter and length, feeding and cutting.

US 512 9438 discloses on arrangement according to the preamble of claim 1 and a method according to the preamble of claim 1.

### BRIEF DISCLOSURE OF THE INVENTION

It is therefore an object of the invention to provide an arrangement and method enabling more than one tree to be handled simultaneously by means of a conventional harvester end known per se and used for felling and feeding tree trunks.

This is achieved by an arrangement and method enabling mass logging, which is characterized by what is stated in the independant claims of the present invention. More specifically, the arrangement of the invention is characterized by what is stated in the characterizing part of claim 1. The method of the invention, in turn, is characterized by what is stated in the characterizing part of claim 11.

The preferred embodiments of the invention are disclosed in the independent claims.

The invention is based on the idea that a conventional harvester end known per se is provided with mass logging equipment of a special design arranged to work both as efficient gripping means enabling mass logging and as means capable of delimbing substantially similarly as conventional delimbing knives.

The invention comprises an arrangement and method for equipping a harvester end of a forestry machine known per se, such as a harvester, in such a way that, when necessary, it may be used for efficiently handling more than one tree at a time or a plural number of trees one after the other, without releasing the trees already collected and held by the harvester end.

This is provided using devices hereinafter referred to as mass logging equipment.

The invention allows significant advantages to be gained. It enables efficient use of a forestry machine for collecting not only merchantable wood but also small-stem trees. Trees of a small diameter in particular may be considered suitable either for energy use or for paper industry, in manners known per se.

This versatile wood handling may be carried out with one and the same harvester end felling, feeding and also otherwise handling the trees without the need to change the harvester end in particular way during the work. Hence normal characteristics of harvester ends do not need to be compromised, and yet the delimbing geometry of the machine as well as its delimbing result also remain substantially unchanged.

On the other hand, the invention is also capable of handling a situation encountered in harvesting, in which the butt end of a tree trunk to be handled is to be used as merchantable wood, whereas the top is not delimbed and will serve as energy wood, for example. With the present solution the tree trunk to be handled may be held throughout this type of work process, too.

The present solution does not have an essential effect on the weight of the harvester end, even if it were used to replace one or more delimbing knives.

The arrangement of the invention is quickly mountable also to harvester ends manufactured before and already in use. In addition, the mounting is extremely simple, because it may be carried out using exactly the same hydraulic cylinders and systems, for example, that are used to control the operation of conventional delimbing devices. Hence the hydraulic control of delimbing means does not have to be changed in any way. When necessary, the harvester end provided with the present arrangement may be returned easily to a form with conventional delimbing means, although this is not necessary as such.

By replacing the lower delimbing means of the harvester end with the arrangement of the invention for felling, the trees collected into the harvester end may be kept in a better and more controlled bundle, particularly at the cutting device of the harvester end, than would be possible with structures located up on the pivot frame. In other words, in mass logging the trees are kept in a tight bundle particularly at the cutting device. For this reason the chain of the chain saw at the harvester end does not come off from the chain plate as easily as before, which contributes to lower chain saw and chain plate costs, less servicing and improved usability of the machine, not to mention increased safety at the harvesting work. A tight tree bundle that stays in place also means that the trees already collected into the wood-handling device do not need to be cut by sawing at the butt end repeatedly, because they remain steady in the grip of the harvester end and do not slide down to the level of movement of the cutting device.

Since the structure of the arrangement of the invention is fairly simple, an extremely competitive structural entity, in comparison with prior art solutions, is achieved.

A specific conventional spring member provided in the arrangement for producing the movements thereof, may be easily replaced e.g. by small pressure-medium-operated cylinders, or the like, that are more versatile as regards both their controllability and path. It is also possible to have a delimbing knife provided of several articulations, for example two.

The present arrangement is mounted to the harvester end preferably to replace the conventional, typically pairs of delimbing knives in such a way that the operation of the harvester end does not change at all. Hence the arrangement is extremely simple to introduce in use.

To further considerably simplify the operation of the arrangement for the user, the forestry machine and its control system may be provided with a specific method for controlling the harvester end, the method combining the movements the operator has previously had to make one by one into specific work sequences, thereby speeding up and simplifying the work for the driver of the forestry machine. Typically the work sequence in question may preferably contain one collecting action by a command given by the operator of the machine to collect a new tree trunk into the wood-handling device. Thus the sequence in question may in fact comprise a plural number of steps, such as the one or more events of opening and closing the delimbing knife, and a felling or cutting by sawing, for example.

On the other hand, it is even conceivable that by compromising the delimbing quality to some extent - for better productivity - more than one tree trunk may be delimbed and fed simultaneously. The solution of the invention allows this, and typically wood material thus handled is suitable, with minor special requirements taken into account, for use in paper industry or energy production, for example. Other advantages of the invention are disclosed in the following more detailed description of particular embodiments of the invention. In connection with the simultaneous feeding of more than one tree, the measuring of the diameter in particular becomes less accurate, but this kind of situation the control system may be provided with a necessary algorithm or the like for the best possible estimate to be provided. On the other hand, in that case the measurement is also subjected to more modest requirements.

Other advantages provided by the invention are disclosed in the following, more detailed description of the invention.

### BRIEF DISCLOSURE OF THE FIGURES

In the following a preferred embodiment of the invention is disclosed in greater detail with reference to the accompanying drawings, in which
Figure 1 is a schematic, axonometric oblique front view of an arrangement of the invention, with the gripping and delimbing means of the harvester end open;
Figure 2 shows the harvester end of Figure 1 with the delimbing means holding a tree guided to the harvester end;
Figure 3 shows the harvester end of Figure 2 with lower delimbing means still squeezing the tree guided to the harvester end, while upper delimbing means are open and waiting for the next tree trunk;
Figure 4 shows the harvester end of Figure 3 with the lower delimbing means still squeezing the first tree guided to the harvester end, while the upper delimbing means squeeze the next tree trunk guided to the harvester end;
Figure 5 shows the harvester end of Figure 4 with the lower delimbing means having now moved to also squeeze the second tree guided to the harvester end;
Figure 6 shows a detail of the situation of Figure 4;
Figure 7 is a detailed view showing a situation where the second tree guided to the harvester end no longer presses against the lower delimbing means;
Figure 8 is a detailed view showing the lower delimbing means in a situation where they are no longer pressed by the second tree guided to the harvester end;
Figure 9 shows a detail of a situation following that of Figure 5;
Figure 10 is a detailed axonometric upward oblique front view of the mass logging equipment forming the lower delimbing means of Figures 1 to 9;
Figure 11 is a detailed axonometric upward oblique rear view of the mass logging equipment of Figure 10;
Figure 12 is a detailed axonometric downward oblique front view of the mass logging equipment of Figure 10;
Figure 13 is a side view of the mass logging equipment of Figure 10;
Figure 14 is a partly cross-sectional side view of the mass logging equipment of Figure 10;
Figure 15 is a partly cross-sectional side view of the mass logging member of Figure 10, with its top knife bent into the position shown in Figure 7;
Figure 16 is a partly cross-sectional side view of a second embodiment of the mass logging equipment with the top knife bent; and
Figure 17 shows a detail of the mass logging equipment of Figure 10, illustrating the preferred interleaving of the root and the top knives.

### DETAILED DISCLOSURE OF A PREFERRED EMBODIMENT

In the following, some preferred embodiments of the present arrangement and method for enabling mass logging are described with reference to the above figures. The arrangement thus comprises structural parts designated in the figures by reference numerals corresponding to those used in this description.

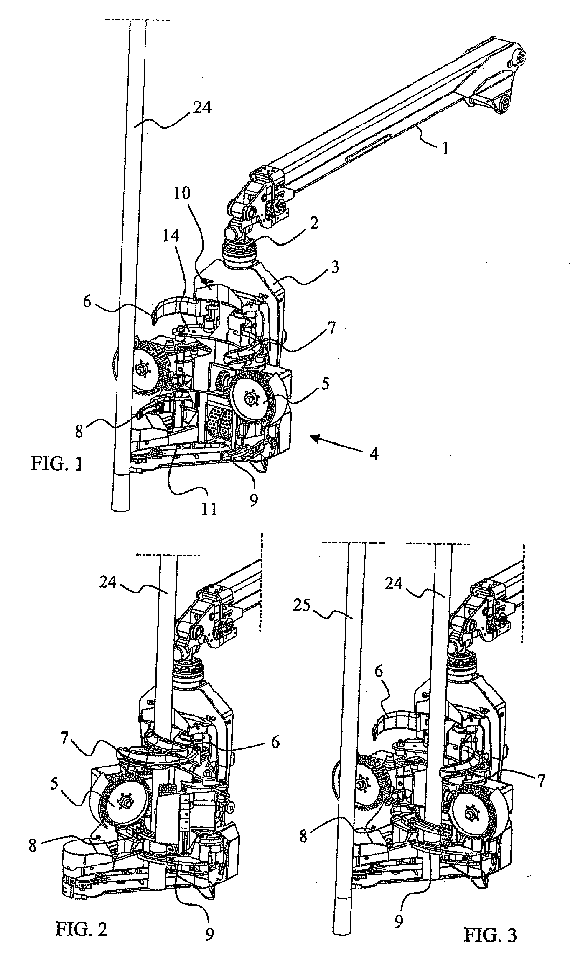

Figure 1 shows a harvester end 4, including its main parts, arranged to a boom 1 of a forestry machine or load-bearing tractor and movable by means of a rotor 2 and a pivot frame 3. The harvester end thus comprises conventional feeding means 5, for example in the form of feeder drums as in the figure, and delimbing means 6 to 10 on the harvester end, such as delimbing knives 6 to 9 pivoting in relation to the body, and a delimbing member 10 fixedly arranged in relation to the body. In the embodiment shown of the figure the harvester end is provided with first - upper - delimbing means 6 and 7 controllable by a linear and/or turning movement with respect to the body to grab a tree trunk or trunks to be handled by the harvester end. Second - lower - delimbing means 8 and 9 are pivotally arranged to the body of the working device, to the vicinity of a cutting device 11 provided on the harvester end, and they also are separately controllable for grabbing the tree trunk or trunks in question. These delimbing means thus also form the gripping means of the harvester end.

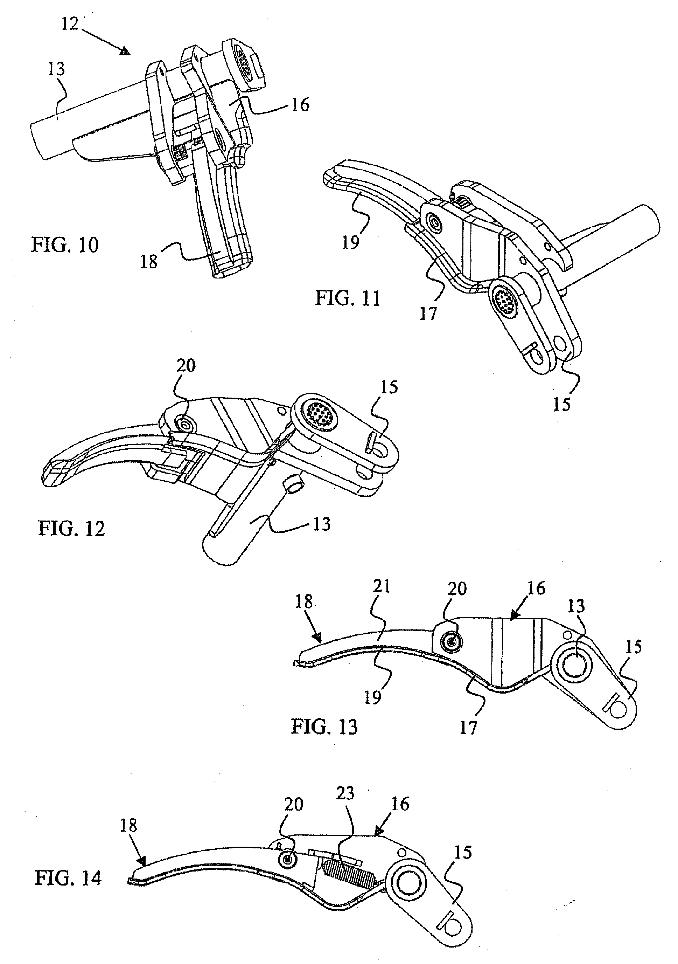

In the above arrangement one or more harvester ends 6 to 9 are replaced, preferably in pairs, by specific mass logging equipment 12 controlled most preferably in a manner known per similarly as the delimbing knives originally used on the harvester end 4. Typically the lowest ones of the original delimbing means, i.e. the delimbing means 8 and 9 in the vicinity of the cutting device 11, have been replaced. Figures 10 to 15 show a preferred embodiment of the mass logging equipment arranged to replace the conventional delimbing means.

As shown in the figures, the mass logging equipment 12 preferably comprises a connecting axle 13 for mounting it to the harvester end 4. The connecting axle is arranged to control the rotational motion of the mass logging equipment in relation to the body 14 at the harvester end. For this purpose the connecting axle is provided with a protruding pivoting arm 15, as shown in the figures. Thus by attaching a conventional actuator (not shown) to the pivoting arm in a manner known per se, the mass logging equipment is pivotable in relation to the body of the harvester end together with other delimbing means provided or independently of them. There are also other ways known per se to implement this pivoting movement, e.g. by an actuator producing a non-linear motion.

Protruding from the connecting axle 13 of the mass logging equipment 12 to a direction substantially opposite to that of the pivoting arm 15 there is provided what is known as a root knife 16. On at least one of the knifeedges protruding from the connecting axle there is provided a blade 17 for cutting branches from the tree trunks to be handled at the harvester end 4. At the root knife end facing away from the connecting shaft there is also provided a pivoting top knife 18 extending further away from the connecting shaft and thereby forming a means substantially similar to a delimbing knife. By providing the top knife with a blade 19 on both sides thereof, it is suitable to be used, similarly as a root knife, for cutting branches from three trunks in both directions of their movement in the harvester end.

The top knife 18 is articulated to the root knife 16 by an axle 20, which is substantially parallel with the connecting axle 13. Hence when caught underneath a tree trunk taken into the harvester end 4, the top knife is easily released by simply guiding the connecting axle into a pivoting motion in relation to the body of the harvester end, the conventional delimbing knives still squeezing the one or more trees in the harvester end. Because of the articulated structure of the mass logging equipment, its top knife yields at the axle and thus allows the top knife to be moved from underneath the bundle of trees collected into the harvester end on top of it. Thus released, the mass logging equipment 12 may be controlled by a new pivoting motion against the tree trunks in the harvester end to press them against the body 14 of the harvester end.

The described mass logging equipment 12 produces an alternating movement allowing a plural number of tree trunks to be collected and bundled into the harvester end 4 in a single work phase.

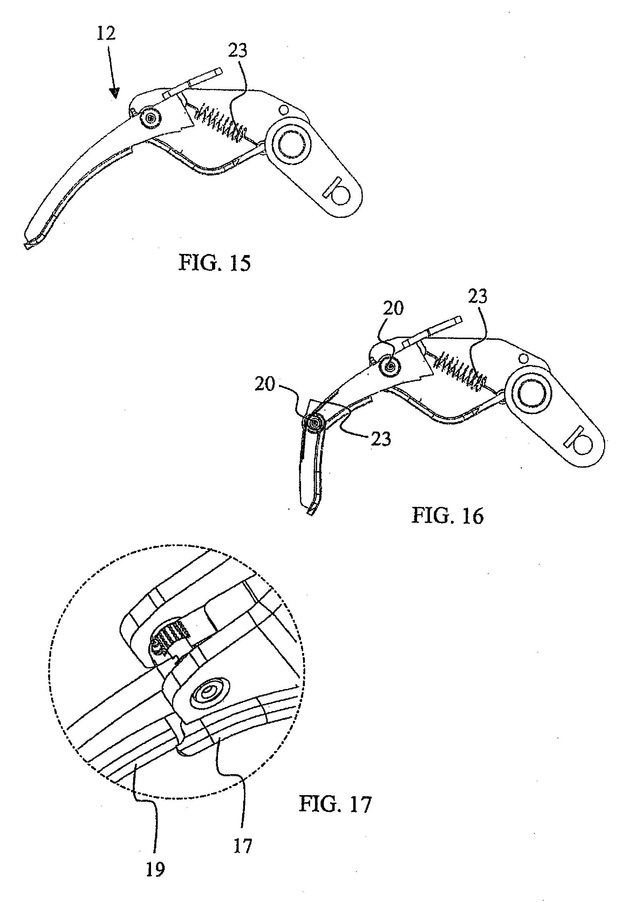

The present mass logging equipment 12 may be implemented in manners known per se for example by moulding one or more structural parts in cast steel or, alternatively, by using a welded structure, for example. It is also conceivable to implement the mass logging member as a multibody structure formed of more than two parts provided with a blade and articulated together, as shown in Figure 16. In that case the top knife 18 is made of two parts in the longitudinal direction thereof. These parts are articulated together preferably in such a way that the connecting joint is parallel with the connecting axle 13 of the mass logging equipment.

The root knife 16 and the top knife 18 of the mass logging equipment 12 are articulated together in such a way that their reciprocal pivoting motion is restricted. By extending the main beam 21 of the top knife, for example, from the axle 20 for a distance towards the connecting axle 13, the body 21 of the root knife 16 forms a counter surface restricting the pivoting motion into a position where the root knife and the top knife form a substantially preferred geometry for the delimbing knife.

Figure 17 shows a detail of the mass logging equipment 12, illustrating a preferred feature thereof. Accordingly, the blades 17 and 19 of the root and the top knife 16 and 18, respectively, extend in an interleaved manner in relation to one another. The mass logging equipment is thus provided with a substantially uniform cutting edge, which allows the accumulation of impurities to the seam line of the knives to be avoided significantly.

On the other hand, to control the reciprocal movement of the root knife 16 and the top knife 18 there is provided a control member 23, which is configured to return the top knife into a position in which the parts substantially form the geometry of the delimbing knife. A most preferred implementation of this control member is a conventional passive spring member, such as a helical spring made of steel, torsion spring, spiral spring, gas spring, torsion bar swing or elastomer spring. The control member may also be provided in the form of a pressure-medium-operated actuator, in which case it may be passive, e.g. a combination of a hydraulic cylinder and a pressure accumulator. It may also be active, in which case the pressure-medium-operated actuator is controlled separately.

In the following the control of the present arrangement is described with a particular reference to Figures 1 to 9.

When the harvester end 4 is used for collecting and handling one or more trees 24, 25 at the same time, a first tree 24 is gripped when the feeder means 5 and the delimbing means 6 to 9 have been opened, as shown in Figure 1, for receiving the tree. Next, at least the delimbing means are guided to press against the tree, as shown in Figure 2, and the tree is cut by the cutting device 11.

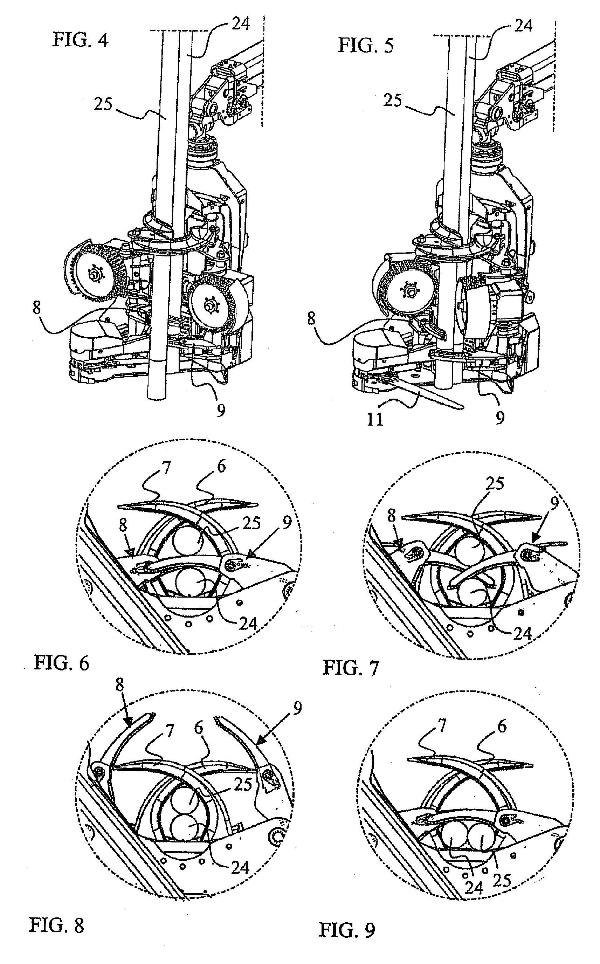

When more trees are to be collected by the harvester end, a particular mass logging control unit provided in the forestry machine is activated separately in each case. In that case the feeder rolls and the substantially fixed delimbing means 6 and 7 provided on the harvester end open, as shown in Figure 3, and the next tree 25 is received. When the mass logging control unit is then activated again, the feeder rolls and the delimbing means with their fixed bodies close automatically, and the devices forming the mass logging equipment open and close one after the other, as shown in Figures 4 and 5. The root knives and top knives in the mass logging equipment thus move into a position in which they squeeze all the tree trunks collected to the harvester end, thus allowing a new tree guided to the harvester end to be cut. The automated working cycle of the mass logging control unit may be easily supplemented by an automated cutting by sawing, which the driver of the forestry machine does not have to start or activated separately.

The operation of the mass logging equipment in connection with the latter working cycle is also depicted in Figures 6 to 9. Accordingly, Figure 6 shows a situation in which the harvester end 4 has gripped a second tree 25, squeezing it with the delimbing means 6 and 7. Figure 7 shows the movement of the mass logging equipment as the work cycle proceeds. The mass logging equipment is controlled independently of the delimbing means into a rotating motion in relation to the harvester end body 14. When squeezed between the trees 24 and 25 in the harvester end, the mass logging equipment fold at the axle 20 to allow the top knife to retract from between the trees.

The mass logging equipment released from between the trees resume their shape consistent with the delimbing means, as shown in Figure 8, by the impact of the control members 23. They are then ready to be guided again to squeeze trees collected to the harvester end, thereby releasing the substantially fixed delimbing means to receive another tree, as shown in Figure 9.

The latter work cycle may be repeated until the harvest end is no longer capable of receiving more trees. The trees are then taken to a desired location, for example to the roadside of a clearing road, or loaded directly into the cargo space of a harvester for a short-distance transport.

A person skilled in the art will find it apparent that as technology advances the basic idea of the invention may be implemented in various ways. The disclosed solution and its embodiments are therefore not restricted to the above examples but may be varied within the scope of the claims.

## Claims

1. An arrangement for enabling mass logging, in which a harvester end (4) has a body (14) provided with
feeder means (5);
delimbing means (6 to 10);
a cutting device (11); and
with at least one piece of mass logging equipment (12) capable of handling more than one tree at a time,
the mass logging equipment (12) being configured to form to the harvester end (4) at least one delimbing means (6 to 9) for simultaneously collecting and handling more than one, preferably vertical, trees (24, 25),
**characterized in that**
the mass logging equipment (12) comprises a means formed of at least two parts (16, 18) joined together by an axle (20) and articulated to the body (14) of the harvester end (4),
the means having
a connecting axle (13) for arranging the means in a pivotal manner to the body of the harvester end;
a root knife (16) protruding from the connecting axle; and
a top knife (18) articulated to the root knife.

2. An arrangement according to claim 1, **characterized in that** the mass logging equipment (12) is arranged to replace a delimbing means (6 to 9) at the harvester end (4).

3. An arrangement according to claim 1 or 2, **characterized in that** the top knife (18) is formed to be of two parts in the longitudinal direction thereof, the parts being articulated with an articulation parallel with the connecting axle (13).

4. An arrangement according to any one of the preceding claims, **characterized in that** the mass logging equipment (12) comprises a control member (23) for controlling the reciprocal movement of the root knife (16) and the top knife (18).

5. An arrangement according to claim 4, **characterized in that** the control member (23) comprises a spring member.

6. An arrangement according to claim 5, **characterized in that** the control member (23) comprises a helical spring.

7. An arrangement according to claim 5, **characterized in that** the control member (23) comprises an elastomer spring.

8. An arrangement according to claim 4, **characterized in that** the control member (23) comprises a pressure-medium-operated actuator.

9. An arrangement according to any one of the preceding claims, **characterized in that** the mass logging equipment (12) is arranged to replace the delimbing means (8, 9) on the side of the cutting device (11).

10. An arrangement according to any one of the preceding claims, **characterized in that** the blades (17, 18) of the root knife (16) and the top knife (18) of the mass logging equipment are arranged into an interleaved position in relation to one another so as to provide a substantially uniform cutting edge.

11. A method for enabling mass logging, in which method a harvester end (4) is used for collecting and handling one or more trees (24, 25) simultaneously in such a way that
when a first tree (24) is gripped, feeder means (5) and delimbing means (6 to 9) are opened to receive the tree,
at least the delimbing means being then pressed against the tree and the tree is cut by means of a cutting device (11),
**characterized in that**
when following trees (25) are gripped, a control command is given to open the means squeezing the tree (24), whereby
other members of the mass logging equipment (12) except for the delimbing means (8, 9) open to receive the tree (25), after which
a second control command is given to guide at least the fixed delimbing means (6, 7) to close and thereby squeeze the trees (24, 25) in the harvester end and to guide the members of the mass logging equipment to open and close one after the other so as to cause the root knives (16) and the top knives (18) provided in the mass logging equipment to move into a position where they squeeze all the trees collected to the harvester end, the tree being then cut.

12. A method according to claim 11, **characterized in that** the second control command is also used for controlling the operation of a cutting saw (11).

## Patentansprüche

1. Anordnung zum Ermöglichen von Mehrfachstammbearbeitung, wobei ein Harvesteraggregat (4) einen Körper (14) hat, der aufweist:
Vorschubmittel (5);
Entästungsmittel (6 bis 10);
eine Schneidevorrichtung (11); und
zumindest eine Mehrfachstammbearbeitungsanlage (12), die mehr als einen Baum mit einem Mal bearbeiten kann,
welche Mehrfachstammbearbeitungsanlage (12) angeordnet ist, am Harvesteraggregat (4) zumindest ein Entästungsmittel (6 bis 9) auszubilden, um mehr als einen, vorzugsweise vertikalen, Baum (24, 25) gleichzeitig zu sammeln und zu bearbeiten,
**dadurch gekennzeichnet, dass**
die Mehrfachstammbearbeitungsanlage (12) ein Mittel aufweist, das aus zumindest zwei miteinander durch eine Achse (20) verbundenen Teilen (16, 18) besteht und am Körper (14) des Harvesteraggregats (4) gelenkig angeordnet ist,
welches Mittel aufweist:
eine Verbindungsachse (13) für die schwenkbare Anordnung des Mittels am Körper des Harvesteraggregats;
einen Wurzelmesser (16), der aus der Verbindungsachse herausragt; und
einen Spitzenmesser (18), der am Wurzelmesser gelenkig gelagert ist.

2. Anordnung nach Anspruch 1, **dadurch gekennzeichnet, dass** die Mehrfachstammbearbeitungsanlage (12) angeordnet ist, ein Entästungsmittel (6 bis 9) am Harvesteraggregat (4) zu ersetzen.

3. Anordnung nach Anspruch 1 oder 2, **dadurch gekennzeichnet, dass** der Spitzenmesser (18) in seiner Längsrichtung zweiteilig ausgebildet ist, wobei die Teile mit einem Gelenk parallel zur Verbindungsachse (13) gelenkig angeordnet sind.

4. Anordnung nach einem der vorhergehenden Ansprüche, **dadurch gekennzeichnet, dass** die Mehrfachstammbearbeitungsanlage (12) ein Steuerelement (23) zur Steuerung der gegenseitigen Bewegung des Wurzelmessers (16) und des Spitzenmessers (18) aufweist.

5. Anordnung nach Anspruch 4, **dadurch gekennzeichnet, dass** das Steuerelement (23) ein Federelement aufweist.

6. Anordnung nach Anspruch 5, **dadurch gekennzeichnet, dass** das Steuerelement (23) eine Schraubenfeder aufweist.

7. Anordnung nach Anspruch 5, **dadurch gekennzeichnet, dass** das Steuerelement (23) eine Elastomerfeder aufweist.

8. Anordnung nach Anspruch 4, **dadurch gekennzeichnet, dass** das Steuerelement (23) einen mit einem Druckmedium betriebenen Stellantrieb aufweist.

9. Anordnung nach einem der vorhergehenden Ansprüche, **dadurch gekennzeichnet, dass** die Mehrfachstammbearbeitungsanlage (12) angeordnet ist, die Entästungsmittel (8, 9) auf der Seite der Schneidevorrichtung (11) zu ersetzen.

10. Anordnung nach einem der vorhergehenden Ansprüche, **dadurch gekennzeichnet, dass** die Klingen (17, 18) des Wurzelmessers (16) und des Spitzenmessers (18) der Mehrfachstammbearbeitungsanlage in Bezug aufeinander in eine überlappende Position angeordnet sind, um eine wesentlich einheitliche Schneide bereitzustellen.

11. Verfahren zum Ermöglichen von Mehrfachstammbearbeitung, bei welchem Verfahren ein Harvesteraggregat (4) für die gleichzeitige Sammlung und Bearbeitung eines oder mehr Bäume (24, 25) verwendet wird, so dass,
wenn ein erster Baum (24) ergriffen wird, Vorschubmittel (5) und Entästungsmittel (6 bis 9) geöffnet werden, um den Baum aufzunehmen,
wobei zumindest die Entästungsmittel dann gegen den Baum gepresst werden und der Baum mittels einer Schneidevorrichtung (11) geschnitten wird,
**dadurch gekennzeichnet, dass**,
wenn nächste Bäume (25) ergriffen werden, ein Steuerbefehl erteilt wird, um die den Baum (24) pressenden Mittel zu öffnen, wobei
sich andere Elemente der Mehrfachstammbearbeitungsanlage (12) als Entästungsmittel (8, 9) öffnen, um den Baum (25) aufzunehmen, woraufhin
ein zweiter Steuerbefehl erteilt wird, um zu steuern, dass sich zumindest die festen Entästungsmittel (6, 7) schließen und somit die Bäume im Harvesteraggregat pressen, und um zu steuern, dass sich die Elemente der Mehrfachstammbearbeitungsanlage eins nach dem anderen öffnen und schließen, so dass die Wurzelmesser (16) und die Spitzenmesser (18) in der Mehrfachstammbearbeitungsanlage dazu gebracht werden, sich in eine Position zu bewegen, wo sie sämtliche im Harvesteraggregat gesammelten Bäume pressen, woraufhin der Baum geschnitten wird.

12. Verfahren nach Anspruch 11, **dadurch gekennzeichnet, dass** der zweite Steuerbefehl auch für die Steuerung des Betriebs einer Abschneidesäge (11) angewandt wird.

## Revendications

1. Agencement pour permettre une exploitation forestière de masse, dans lequel une extrémité d'abatteuse (4) comporte un corps (14) pourvu :
d'un moyen de distribution (5) ;
d'un moyen d'ébranchage (6 à 10) ;
d'un dispositif de coupe (11) ; et
au moins un élément d'équipement d'exploitation forestière de masse (12) apte à manier plus d'un arbre à la fois,
l'équipement d'exploitation forestière de masse (12) étant configuré pour former, à l'extrémité d'abatteuse (4), au moins un moyen d'ébranchage (6 à 9) pour, simultanément, recueillir et manier plus d'un arbre, de préférence vertical (24, 25),
**caractérisé en ce que** :
l'équipement d'exploitation forestière de masse (12) comprend un moyen constitué d'au moins deux parties (16, 18) reliées l'une à l'autre par un axe (20) et articulées sur le corps (14) de l'extrémité d'abatteuse (4),
le moyen comportant :
un axe de connexion (13) pour disposer le moyen d'une manière pivotante sur le corps de l'extrémité d'abatteuse ;
un couteau racine (16) faisant saillie depuis l'axe de connexion ; et
un couteau sommet (18) articulé sur le couteau racine.

2. Agencement selon la revendication 1, **caractérisé en ce que** l'équipement d'exploitation forestière de masse (12) est agencé pour remplacer un moyen d'ébranchage (6 à 9) à l'extrémité d'abatteuse (4).

3. Agencement selon la revendication 1 ou 2, **caractérisé en ce que** le couteau sommet (18) est constitué de façon à comporter deux parties dans sa direction longitudinale, les parties étant articulées avec une articulation parallèle à l'axe de connexion (13).

4. Agencement selon l'une quelconque des revendications précédentes, **caractérisé en ce que** l'équipement d'exploitation forestière de masse (12) comprend un organe de commande (23) pour commander le mouvement de va-et-vient du couteau racine (16) et du couteau sommet (18).

5. Agencement selon la revendication 4, **caractérisé en ce que** l'organe de commande (23) comprend un élément formant ressort.

6. Agencement selon la revendication 5, **caractérisé en ce que** l'organe de commande (23) comprend un ressort hélicoïdal.

7. Agencement selon la revendication 5, **caractérisé en ce que** l'organe de commande (23) comprend un ressort en élastomère.

8. Agencement selon la revendication 4, **caractérisé en ce que** l'organe de commande (23) comprend un actionneur actionné par fluide de pression.

9. Agencement selon l'une quelconque des revendications précédentes, **caractérisé en ce que** l'équipement d'exploitation forestière de masse (12) est agencé pour remplacer le moyen d'ébranchage (8, 9) sur le côté du dispositif de coupe (11).

10. Agencement selon l'une quelconque des revendications précédentes, **caractérisé en ce que** les lames (17, 18) du couteau racine (16) et du couteau sommet (18) de l'équipement d'exploitation forestière de masse sont agencées entrelacées afin d'obtenir une arête de coupe sensiblement uniforme.

11. Procédé pour permettre une exploitation forestière de masse, dans lequel procédé une extrémité d'abatteuse (4) est utilisée pour recueillir et manier un ou plusieurs arbres (24, 25) simultanément de manière que :
lorsqu'un premier arbre (24) est saisi, un moyen de distribution (5) et un moyen d'ébranchage (6 à 9) soient ouverts pour recevoir l'arbre,
au moins le moyen d'ébranchage étant alors pressé contre l'arbre et l'arbre étant coupé au moyen d'un dispositif de coupe (11),
**caractérisé en ce que** :
lorsque les arbres suivants (25) sont saisis, une instruction de commande est donnée pour ouvrir le moyen comprimant l'arbre (24), grâce à quoi :
d'autres éléments de l'équipement d'exploitation forestière de masse (12), excepté le moyen d'ébranchage (8, 9), s'ouvrent pour recevoir l'arbre (25), après quoi :
une seconde instruction de commande est donnée pour guider au moins le moyen d'ébranchage (6, 7) fixe afin qu'il se ferme et donc comprime les arbres (24, 25) dans l'extrémité d'abatteuse et pour guider les éléments de l'équipement d'exploitation forestière de masse (12) pour qu'ils s'ouvrent et se ferment les uns après les autres afin d'amener les couteaux racine (16) et les couteaux sommet (18) prévus dans l'équipement d'exploitation forestière de masse à se déplacer jusque dans une position dans laquelle ils compriment tous les arbres recueillis à l'extrémité d'abatteuse, l'arbre étant ensuite coupé.

12. Procédé selon la revendication 11, **caractérisé en ce que** la seconde instruction de commande est également utilisée pour commander l'actionnement d'une scie à débiter (11).
